# EUROPEAN PATENT SPECIFICATION

(11) **EP 2 366 476 B1**
(45) Date of publication and mention of the grant of the patent: **02.07.2014**
(21) Application number: 10156136.3
(22) Date of filing: 10.03.2010
(51) Int. Cl.: B22F 3/105, B22F 7/06

(54) **Method for Fabricating Turbine Airfoils and Tip Structures Therefor**
Verfahren zur Herstellung von Turbinenschaufeln und Spitzenstrukturen dafür
Procédé de fabrication de surfaces portantes de turbine et structures à pointe associées

(43) Date of publication of application: 21.09.2011
(73) Proprietor: General Electric Company, Schenectady, NY 12345 (US)
(72) Inventor: Qi, Huan, Niskayuna, NY 12309 (US); Singh, Prabhjot, Niskayuna, NY 12309 (US); Desander, Donald Brett, Malden, MA 02148 (US); Azer, Magdi Naim, Niskayuna, NY 12309 (US); Tewari, Sudhir Kumar, West Chester, OH 45069 (US); Gledhill, Mark Douglas, South Hamilton, MA 01982 (US); Sabato, Joseph Giancarlo, Morrow, OH 45152 (US); Rockstroh, Todd Jay, Mainville, OH 45039 (US)
(74) Representative: Williams, Andrew Richard

(56) References cited:
- EP-A1- 1 721 699
- EP-A2- 1 952 932
- WO-A1-2008/071165
- US-A1- 2008 237 403
- US-A1- 2009 271 985

## Description

### BACKGROUND OF THE INVENTION

This invention relates generally to the manufacture and repair of gas turbine engine components and more particularly to the production of tip cap structures for turbine airfoils.

Cast turbine airfoils for advanced gas turbine engines have internal features that challenge the capability of current casting technologies. The castings require complex ceramic cores to form the internal features and these cores are fragile during the casting process. The result is that casting yields of 50 percent to 70 percent are not uncommon. The 30 percent to 50 percent casting scrap factors into the cost of the useable castings.

The issue is compounded by exotic alloys such as single crystal materials that drive up the cost to cast a part and thus drive up the cost caused by scrapping hardware. If a mere 5 percent to 10 percent casting yield improvement can be achieved, the impact to each gas turbine engine is in the millions of dollars per year, based on volume.

One basic casting limitation is that the ceramic core that forms the internal structure of the airfoil can only be secured by the lower (i.e. root) portion with the majority of the core "floating" within the casting wax form. The forces of the molten metal and thermally induced forces during the cooling and solidification cycle result in movement and/or breakage of the ceramic core (referred to as "core shift"). The motion can be such that the cast component no longer meets drawing requirements, for example by violating minimum casting wall thicknesses. If the core fractures during the process this will also cause the component to fail requirements.

Cast turbine airfoils often include a tip cap and/or a "squealer tip". A tip cap is a relatively small extension, having a cross-sectional shape conforming to that of the turbine blade, either integral with or mounted on the radially outer end of the turbine blade. The utilization of tip caps on turbine blades can effectively reduce the disadvantageous effects of rubbing between turbine blades and the shroud. However, prior art methods of casting turbine blades include the tip cap as an integral part, which exacerbates the core shift problems described above. It is also known to manufacture tip caps separately and then attach them to airfoils, but this requires welding processes, which require costly tooling and are relatively slow.

EP 1 721 699 A1 discloses a method of producing an airfoil using microwave powder sintering and corresponding to the features of the preamble of claim 1 herein.

US 2008/0237403 A1 discloses a metal injection molding process for producing bimetallic components from metallic powders of first and second alloys.

EP 1,952,932 A2 discloses a method for laser cladding a substrate by depositing overlapping beads of material to the substrate.

WO 2008/071165A1 discloses a device and a method for the repair or production of blade tips for blades of a gas turbine engine.

US 2009/0271985 A1 discloses a method of repairing blades of a gas turbine engine.

### BRIEF DESCRIPTION OF THE INVENTION

These and other shortcomings of the prior art are addressed by the present invention, which provides a method for supporting an airfoil core during casting, and for forming a tip structure on an airfoil while maintaining the metallurgical integrity of the finished component.

According to an aspect of the invention, a method for making a turbine airfoil tip structure is provided according to claim 1 herein.

According to another aspect of the invention, a method is provided for repairing a turbine airfoil according to claim 9 herein.

### BRIEF DESCRIPTION OF THE DRAWINGS

The invention may be best understood by reference to the following description taken in conjunction with the accompanying drawing figures in which:
Figure 1 is a perspective view of an exemplary turbine blade constructed in accordance with an aspect of the present invention;
Figure 2 is a perspective view of a prior art mold core used in casting a blade;
Figure 3A is a perspective view of a mold core;
Figure 3B is a perspective view of an alternative mold core;
Figure 4 is a schematic, partial cross-sectional view of an assembled mold;
Figure 5 is a schematic, cross-sectional view of the mold of Figure 4 with a portion of a blade casting therein;
Figure 6 is a schematic, partial cross-sectional view of an as-cast turbine blade, which includes an open tip;
Figure 7 is a schematic, partial cross-sectional view of the turbine blade of Figure 6, with a tip plate applied thereto;
Figure 8 is another view of the as-cast turbine blade with a tip wall formed thereon;
Figure 9 is a schematic view of a laser welding apparatus;
Figure 10 is a schematic, partial cross-sectional view of an as-cast turbine blade, which includes an open tip;
Figure 11 is a schematic, partial cross-sectional view of the turbine blade of Figure 10, with a tip shim applied thereto;
Figure 12 is a another view of the turbine blade of Figure 11 with a tip wall formed thereon;
Figure 13 is a schematic, partial cross-sectional view of an as-cast turbine blade, which includes an open tip, filled with metallic powder;
Figure 14 is a view of the turbine blade of Figure 13 after a laser sintering process; and
Figure 15 is a another view of the turbine blade of Figure 14 with a tip wall formed thereon.

### DETAILED DESCRIPTION OF THE INVENTION

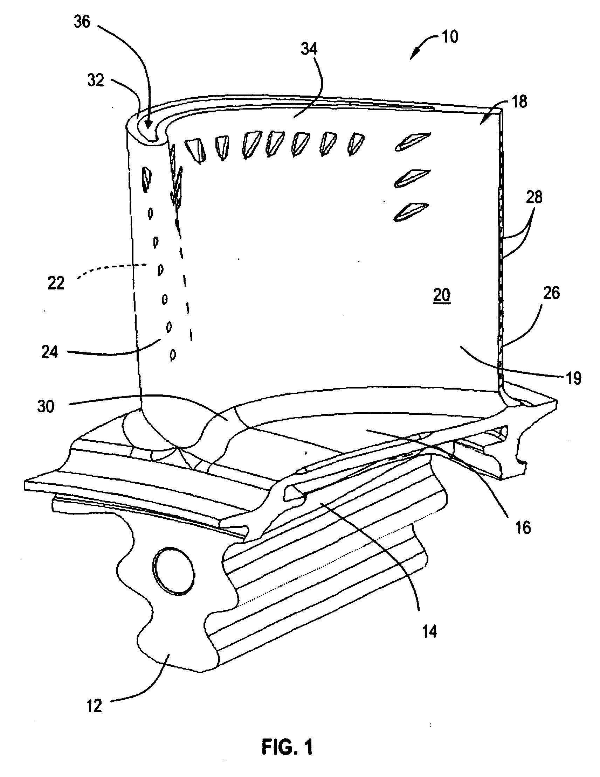

Referring to the drawings wherein identical reference numerals denote the same elements throughout the various views, Figure 1 illustrates an exemplary turbine blade 10. The turbine blade 10 includes a conventional dovetail 12, which may have any suitable form including tangs that engage complementary tangs of a dovetail slot in a rotor disk (not shown) for radially retaining the blade 10 to the disk as it rotates during operation. A blade shank 14 extends radially upwardly from the dovetail 12 and terminates in a platform 16 that projects laterally outwardly from and surrounds the shank 14. A hollow airfoil 18 extends radially outwardly from the platform 16. The airfoil 18 has an outer wall 19 comprising concave pressure side outer wall 20 and a convex suction side outer wall 22 joined together at a leading edge 24 and at a trailing edge 26. The trailing edge 26 may incorporate trailing edge cooling passages such as the illustrated holes 28. The airfoil 18 has a root 30 and a tip 32. The radially outermost portion of the airfoil 18 defines a peripheral tip wall 34, sometimes referred to as a "squealer tip". A tip cap 36 closes off the interior of the airfoil 18 and lies recessed a small distance radially inward from the tip 32. The airfoil 18 may take any configuration suitable for extracting energy from the hot gas stream and causing rotation of the rotor disk. The blade 10 is preferably formed as a one-piece casting of a suitable "superalloy" of a known type, such as a nickel-based superalloy (e.g. Rene 80, Rene 142, Rene N4, Rene N5) which has acceptable strength at the elevated temperatures of operation in a gas turbine engine.

The interior of the turbine blade 10 is mostly hollow and includes a number of internal cooling features of a known type, such as walls defining serpentine passages, ribs, turbulence promoters ("turbulators"), etc. While the turbine blade 10 is a high pressure turbine blade, the principles of the present invention are applicable to any type of airfoil having a hollow interior.

Components such as the turbine blade 10 are manufactured using a known investment casting process. The method includes shaping the turbine blade in wax by enveloping a conventional alumina or silica based ceramic core which defines internal coolant passages. The wax assembly then undergoes a series of dips in liquid ceramic solution. The part is allowed to dry after each dip, forming a hard outer shell, typically a conventional zirconia based ceramic shell. After all dips are complete, and the wax assembly is encased by several layers of hardened ceramic shell, the assembly is placed in a furnace where the wax in the shell is melted out.

After wax removal, the mold comprises the internal ceramic core surrounded by the outer ceramic shell. The cavity between the core and the outer shell defines the component and its interior features. The mold is again placed in the furnace, and liquid metal is poured into an opening at the top of the mold. The molten metal enters the space between the ceramic core and the ceramic shell, previously filled by the wax. After the metal is allowed to cool and solidify, the external shell is broken and removed, exposing the casting which has taken the shape of the cavity created by removal of the wax, and which encases the internal ceramic core. The casting is then placed in a leaching tank, where the core is dissolved. The component now has the shape of the wax form, and an internal cavity which was previously filled by the internal ceramic core.

The relative thermal growths of the ceramic outer shell and the ceramic core material are different, so that after the metal has been poured and is allowed to cool, the relative shrinking of the shell and core components are different. This can cause varying wall thicknesses at areas of the metal nozzle part where one side of the wall is defined by the external shell, and the other side of the wall is engaged by the internal core.

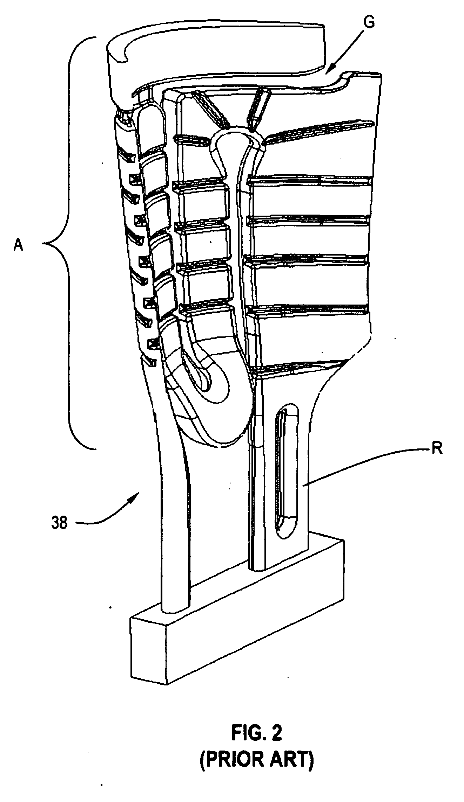

Figure 2 illustrates a prior art core 38. Relatively large cross-sectional areas of the root portion "R" of the core 38 define the shank 14 of the turbine blade 10. This root portion R is configured so as to be rigidly supported during the casting process. However, a portion "A" which defines the airfoil 18 is normally unsupported, and is a substantial distance from the root portion R. Furthermore, a gap "G" is incorporated in the core 38 so as to define an integral tip cap 36 (Figure 1). This greatly reduces the ability to support the core 38.

In prior art processes, the core 38 is typically allowed to "float" and may thus shift its position relative to the outer shell during the casting process. This can cause the walls of a component such as an airfoil to be less than a required minimum thickness. The outer end of the core 38 can be supported by structures such as quartz rods. However, these are prone to breakage and can cause wall shift.

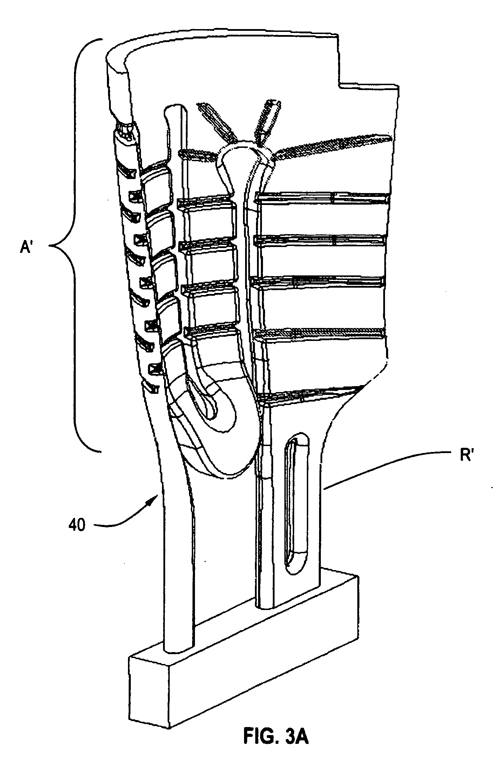

To avoid core such shift, the turbine blade 10 is cast by a modification of the above process, which incorporates an "open-top" casting configuration, and an extended core. Figure 3A illustrates an exemplary core 40. It too includes a root portion "R"' which defines the shank 14 of the turbine blade 10, and an airfoil portion "A'" which defines the airfoil 18. In contrast to prior art configurations, the gap "G" is eliminated, and a substantial percentage of the cross-sectional area of the core 40 extends to the radially outer end of the airfoil 18, or beyond.

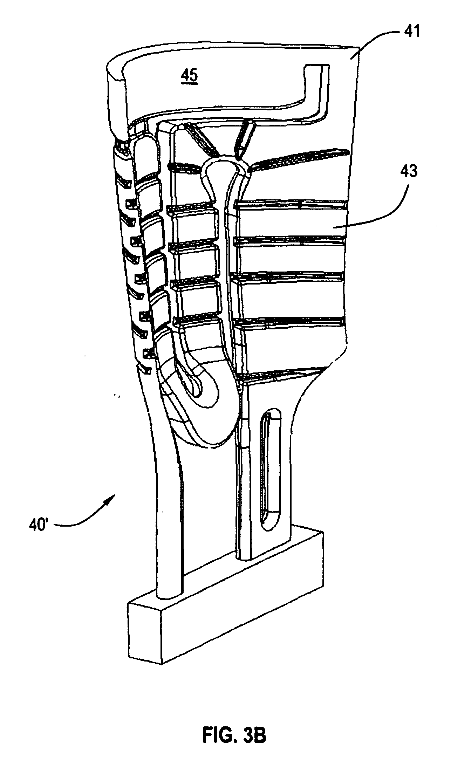

Figure 3B illustrates a slightly different core 40' which has a gap "G"' that defines an airfoil tip cap, similar to that of the prior art core 38. However, it also includes a bridge 41 of substantial cross-sectional area extending from the main body 43 of the core 40' to a horizontal member 45 that would otherwise be unsupported.

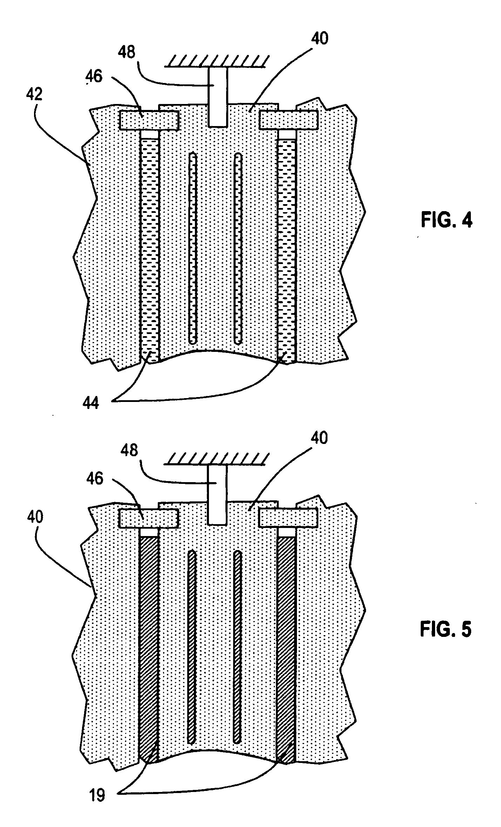

Figure 4 is a schematic pre-casting view of a portion of the core 40 and a surrounding outer shell 42. The space between the core 40 and the outer shell 42 defines the airfoil 18 and is filled with wax 44.

The extension of the core 40 permits the core 40 to be rigidly supported during the casting process, such that little or no relative motion will occur between the core 40 and the outer shell 42. In the illustrated example, tie rods 46 (e.g. ceramic or metal) are provided which extend between the core 40 and the outer shell 42. The core 40 could also be supported by attachment to external tooling which is shown schematically at 48.

An after-casting view shown in Figure 5. After the casting process is complete, the core 40 is removed by caustic leaching using known techniques. However, by exposing up more area at the tip, the leaching process has a larger area of the core 40 to act on. The leaching process and core cleanout is therefore expected to be measured in hours instead of days for further cost reduction. In one example, it is estimated that the leaching process may be reduced from about seven to nine 10-hour-long cycles using the prior art configuration, to about two 10-hour-long cycles.

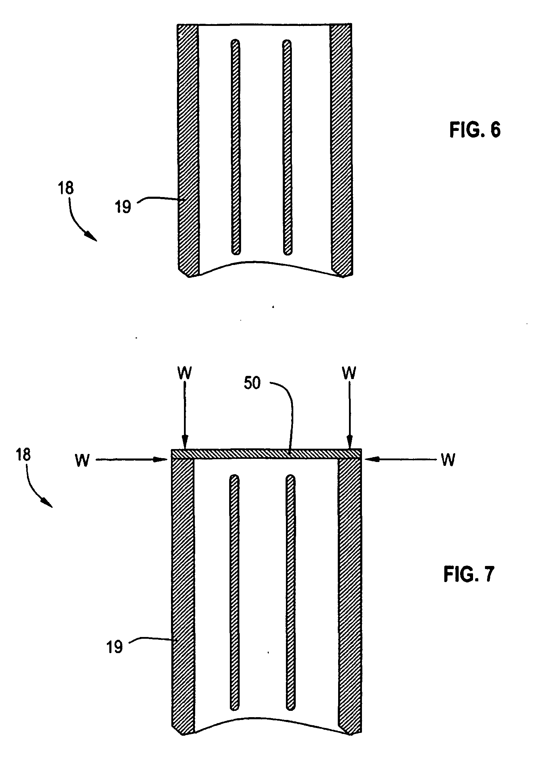

Figure 6 schematically illustrates the airfoil 18 after casting and removal of the outer shell 42 and the core 40. At this point the radially outer end of the airfoil 18 is open and must be closed to provide a usable component.

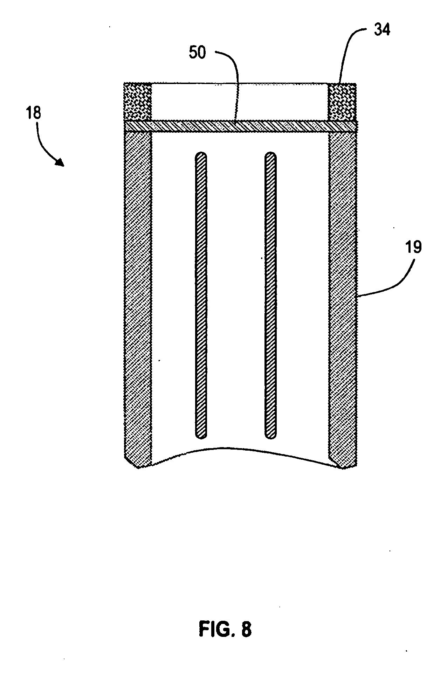

Figures 7 and 8 illustrate one method by which the outer end of the airfoil 18 may be closed. In a first step, a tip plate 50 is placed on the outer end of the airfoil 18, in contact with the outer wall 19. The tip plate 50 may be formed by casting, rolling, stamping, etc. In the illustrated example it is about 0.5 mm (0.02 in.) to about 1 mm (0.040 in.) thick. The tip plate 50 is constructed from a material that is metallurgically compatible with the airfoil body 50. Representative examples of suitable materials include known "superalloys", e.g. Rene 80, Rene 142, Rene N4, Rene N5. The tip plate 50 may be formed with a selected crystalline microstructure, such as directionally solidified ("DS") or single-crystal ("SX").

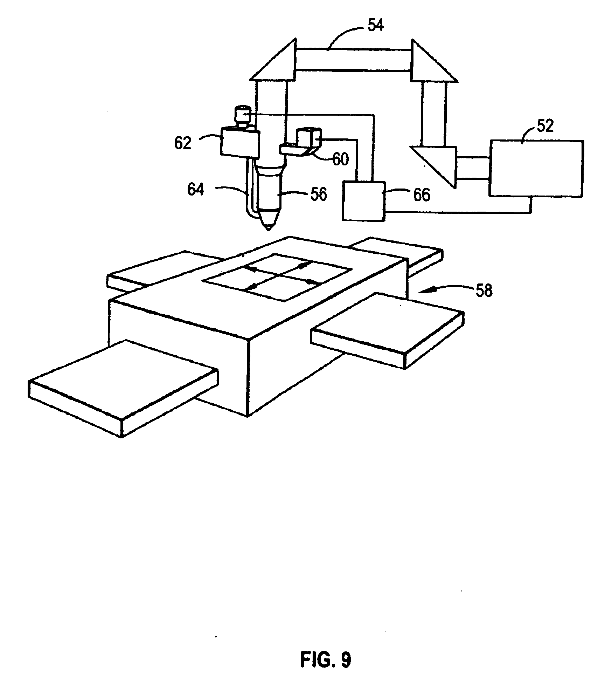

The tip plate 50 is bonded to the outer wall 19 by laser welding. An example of a suitable apparatus for laser welding is disclosed in U.S. Patent No. 5,622,638 to Schell et al., assigned to the assignee of this invention, and is schematically illustrated in Figure 9. The apparatus includes a laser 52, an enclosed beam delivery conduit 54, laser focusing optics 56, a part positioning system 58, a vision system 60 for part location and laser path control, an optional preheating apparatus such as a preheat box or an induction coil (not shown), and a powder feed system 62 with a powder tube 64. The working and coordination of the individual parts of the apparatus are controlled through a computerized system controller 66.

Using the apparatus of Figure 9, laser energy is directed at the tip plate 50 from the end or the peripheral edges (see arrows "W" in Figure 7) so as to produce a through-weld and fuse the outer periphery of the tip plate 50 to the outer wall 19. By using this process, the crystal microstructure of the airfoil 18 and the tip plate 50 (e.g. DS or SX) can be substantially maintained.

Next, the tip wall 34 is formed through a freeform laser fabrication process. Using the apparatus shown in Figure 9, molten alloy powder is deposited on the tip plate 50 in one or more passes. The powder alloy composition may be substantially the same as that of the basic turbine blade 10. Alternatively, the powder alloy composition may be a material with better resistance to corrosion at high temperatures than the base alloy of the airfoil (e.g. nickel-based alloys such as RENE 142, RENE 195). This process, sometimes referred to as "reverse machining", produces a structure that is metallurgically bonded to the tip plate 50. With proper control of the process parameters, this process can produce the same microstructure in tip wall 34 (e.g. directionally solidified or single crystal) as that of the turbine blade 10. For example, a continuous wave beam of about 300W to about 1000W power may be used, with a traverse rate of about 0.25 cm/s (0.1 in./s) to about 0.76 cm/s (0.3 in./s) and preferably about 0.44 cm/s (0.175 in./s) to about 0.51 cm/s (0.200 in./s). About 10 passes result in a tip wall 34 (see Figure 8) of a suitable height and a near-net shape. As used herein, the term "near-net" refers to a structure that does require substantial additional machining processes in order to arrive at a finished part. Once the freeform fabrication process is finished, the tip wall 34 may be further formed by known processes of machining, grinding, coating, etc.

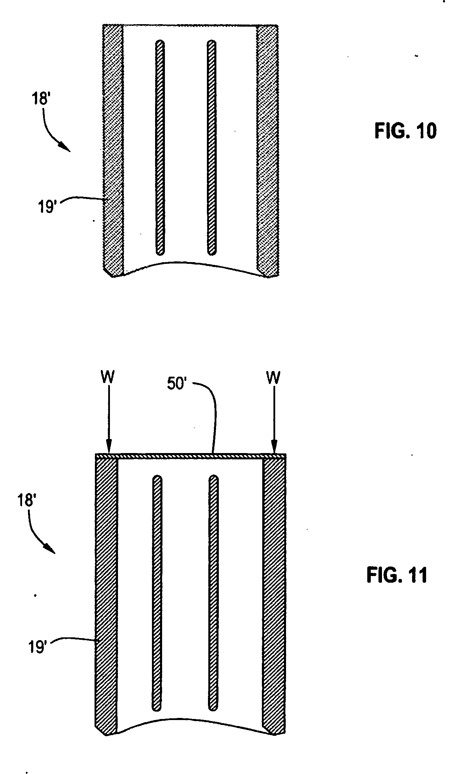

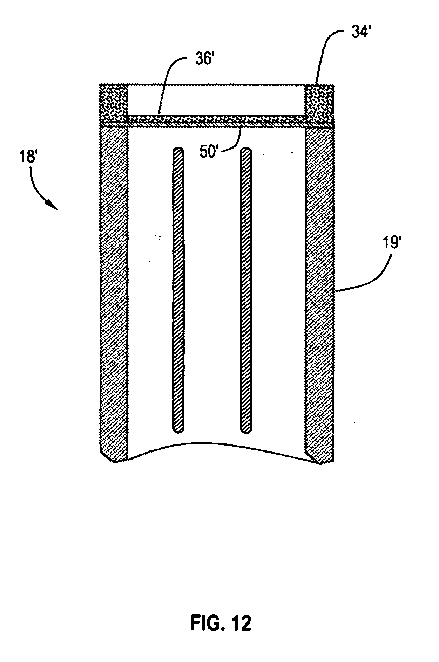

Figures 10-12 depict another method by which the outer end of an airfoil 18' (similar to the airfoil 18) may be closed. In a first step, a shim 50' is placed on the outer end of the airfoil 18', in contact with the outer wall 19'. The shim 50' is similar in construction and material to the tip plate 50, but is substantially thinner, about as thick as a typical layer of laser-deposited material. In the illustrated example it is about 0.1 mm (0.004 in.) to about 0.3 mm (0.012 in.) thick, preferably about 0.2 mm (0.008 in.) to about 0.25 mm (.010 in.) thick.

The shim 50' is bonded to the outer wall 19' by laser welding as described above, so as to produce a through-weld and fuse the outer periphery of the shim 50' to the outer wall 19'.

Next, a freeform laser fabrication process is used to deposit material over the shim 50', defining a tip cap 36', and to build up a tip cap plenum wall 34' of a suitable height and a near-net shape. Again, this may be done using the apparatus shown in Figure 9. Once the freeform fabrication process is finished, the tip wall 34' and tip cap 36' may be further formed by known processes of machining, grinding, coating, etc.

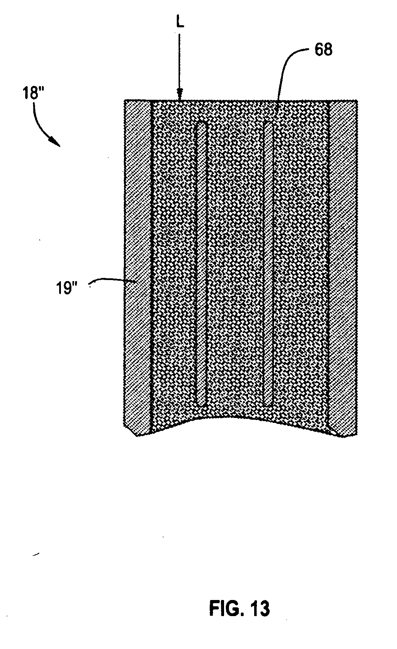

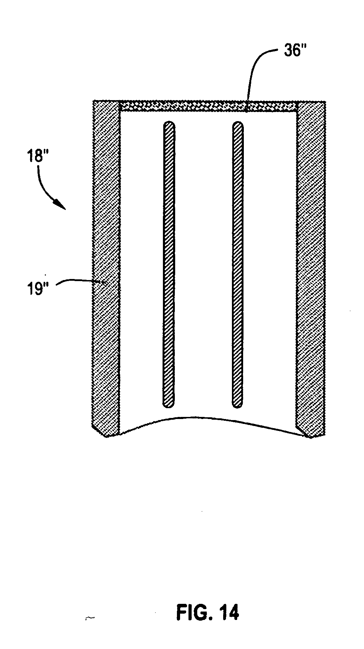

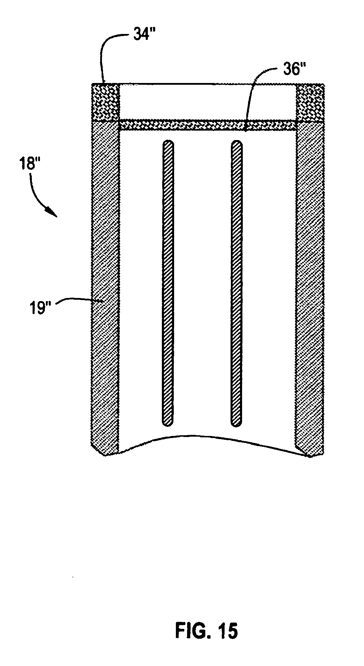

Figures 13-15 depict an airfoil 18" formed by a method within the scope of the claimed invention. Figure 13 illustrates the airfoil 18" in the as-cast condition with an outer wall 19". The interior of the airfoil 18" is filled with a suitable metallic alloy powder 68, such as the powder described above, which is scraped flush or otherwise leveled with the outer end of the outer wall 19". Then, using the apparatus illustrated in Figure 9, the powder 68 is sintered together and bonded to the outer wall 19" by directing laser energy at it, shown schematically at arrow "L". The exact process parameters may vary to suit a specific application. In the illustrated example, a short pulsed infrared laser beam is used, with an average power of 1-100W, pulse frequency of I Hz to 200kHz. The translation speed or scanning speed, if the laser beam is used with a scanner, is approximately 5 mm/s (0.197 in./s) to about 500 mm/s (19.7 in./s). Figure 14 depicts the airfoil 18" after the powder 68 has been sintered into a completed tip cap 36" and the excess powder 68 removed (for example by blowing or vacuuming through passages in the base of the airfoil 18"). With proper control of the process parameters, this process can produce the same microstructure in the tip cap 36" (e.g. directionally solidified or single crystal) as that of the airfoil 18".

Once the tip cap 36" is formed, a tip wall 34" is formed on top of the tip cap 36", using the freeform laser fabrication process described above (see. Once the freeform fabrication process is finished, the tip cap 36" and tip wall 34" may be further formed by known processes of machining, grinding, coating, etc.

The freeform laser fabrication method described above may be used to create a tip structure on any type of airfoil. For example, while it is described above in the context of new production, the method could also be used to create upgrade or repair an existing airfoil by first cutting off the existing tip structure to arrive at a partial airfoil similar to that shown in Figure 6.

The methods described above will significantly improve turbine airfoil casting yields by reducing or eliminating core shift. An additional benefit of this approach is the ability to precisely control the component wall thickness in various locations, thereby reducing scarfing (overdrilling) losses in downstream cooling hole drilling operations. Using this method the blades can be designed and cast with the wall thickness necessary only to provide required strength and without allowances for casting variation. This could potentially result in reduced component weight, and subsequently lower the overall weight of the engine and improve specific fuel consumption during operation of the engine. Furthermore, the freeform method of making the tip structure will lower production costs by eliminating complex and expensive tooling.

The foregoing has described a method for making gas turbine engine airfoils and tip structures. While specific embodiments of the present invention have been described, it will be apparent to those skilled in the art that various modifications thereto can be made without departing from the scope of the invention. Accordingly, the foregoing description of the preferred embodiment of the invention and the best mode for practicing the invention are provided for the purpose of illustration only and not for the purpose of limitation.

## Claims

1. A method for making a turbine airfoil tip structure, comprising:
(a) providing a turbine airfoil (18") having an outer wall (19") which defines a hollow interior, wherein a tip of the airfoil (18") is open to the hollow interior;
**characterised in that** the method further comprises:
(b) packing the interior of the airfoil (18") with metallic powder (68);
(c) using laser energy directed to sinter an exposed layer of the powder so as to form a tip cap (36") which is metallurgically bonded to the outer wall (19") and closes off the interior of the airfoil (18"); and
(d) removing excess metallic powder (68) from the interior of the airfoil (18").

2. The method of claim 1 wherein the airfoil (18") has a directionally solidified or single crystal microstructure, and the tip wall (36") has substantially the same microstructure as the airfoil (18").

3. The method of claim 1 wherein the powder is sintered by multiple passes of a laser beam.

4. The method of claim 1 wherein the laser energy is applied in pulses.

5. The method of claim 1 further comprising applying a radially-outwardly-extending tip wall to the tip cap by:
(a) depositing molten metallic powder on the tip cap, wherein the powder is melted using laser energy ; and
(b) allowing the molten powder to solidify.

6. The method of claim 1 wherein the powder comprises an alloy which is more corrosion resistant than an alloy of the airfoil.

7. The method of claim 5 wherein the airfoil has a directionally solidified or single crystal microstructure, and the tip wall has substantially the same microstructure as the airfoil.

8. The method of claim 1 wherein the outer wall comprises spaced-apart pressure and suction side walls.

9. A method for repairing a turbine airfoil (18") which includes an outer wall (19") defining a hollow interior, wherein a tip of the airfoil (18") is closed off by a tip cap (36") ; the method comprising:
(a) removing the tip cap from the airfoil (18");
(b) packing the interior of the airfoil (18") with metallic powder (68); and
(c) using laser energy directed to sinter an exposed layer of the powder so as to form a new tip cap (36") which is metallurgically bonded to the outer wall (19") and closes off the interior of the airfoil (18"); and
(d) removing excess metallic powder (68) from the interior of the airfoil (18")

10. The method of claim 9 wherein the airfoil (18") has a directionally solidified or single crystal microstructure, and the new tip cap has substantially the same microstructure as the airfoil (18").

11. The method of claim 9 wherein the powder is sintered by multiple passes of a laser beam.

12. The method of claim 10 wherein the laser energy is applied in pulses.

13. The method of claim 10 further comprising applying a radially-outwardly-extending tip wall to the tip cap by:
(a) depositing molten metallic powder on the new tip cap, wherein the powder is melted using laser energy; and
(b) allowing the molten powder to solidify.

14. The method of claim 9 wherein the powder comprises an alloy which is more corrosion resistant than an alloy of the airfoil.

15. The method of claim 9 wherein the airfoil has a directionally solidified or single crystal microstructure, and the new tip cap has substantially the same microstructure as the airfoil.

## Patentansprüche

1. Verfahren zum Herstellen einer Spitzenstruktur für eine Turbinenschaufel, umfassend:
(a) Bereitstellen einer Turbinenschaufel (18"), die eine Außenwand (19") aufweist, welche einen hohlen Innenraum definiert, wobei eine Spitze der Schaufel (18") zum hohlen Innenraum hin offen ist;
**dadurch gekennzeichnet, dass** das Verfahren weiterhin umfasst:
(b) Befüllen des Innenraums der Schaufel (18") mit metallischem Pulver (68);
(c) Verwenden von Laserenergie, die darauf gerichtet ist, eine exponierte Schicht des Pulvers zu sintern, um dadurch eine Spitzenkappe (36") zu bilden, die mit der Außenwand (19") metallurgisch verbunden ist und den Innenraum der Schaufel (18") abschließt; und
(d) Entfernen von überschüssigem metallischem Pulver (68) aus dem Innenraum der Schaufel (18").

2. Verfahren gemäß Anspruch 1, wobei die Schaufel (18") eine gerichtet erstarrte oder Einkristall-Mikrostruktur aufweist und die Spitzenwand (36") im Wesentlichen die gleiche Mikrostruktur wie die Schaufel (18") aufweist.

3. Verfahren gemäß Anspruch 1, wobei das Pulver durch mehrfache Durchläufe eines Laserstrahls gesintert wird.

4. Verfahren gemäß Anspruch 1, wobei die Laserenergie in Impulsen angewendet wird.

5. Verfahren gemäß Anspruch 1, das außerdem das Anbringen einer sich radial nach außen erstreckenden Spitzenwand an die Spitzenkappe umfasst durch:
(a) Ablagern von geschmolzenem metallischem Pulver an der Spitzenkappe, wobei das Pulver unter Verwendung von Laserenergie geschmolzen wird; und
(b) Erlauben, dass das geschmolzene Pulver erstarrt.

6. Verfahren gemäß Anspruch 1, wobei das Pulver eine Legierung umfasst, die korrosionsbeständiger als eine Legierung der Schaufel ist.

7. Verfahren gemäß Anspruch 5, wobei die Schaufel eine gerichtet erstarrte oder Einkristall-Mikrostruktur aufweist, und die Spitzenwand im Wesentlichen die gleiche Mikrostruktur wie die Schaufel aufweist.

8. Verfahren gemäß Anspruch 1, wobei die Außenwand voneinander beabstandete druck- und sogseitige Wände umfasst.

9. Verfahren zum Reparieren einer Turbinenschaufel (18"), die eine Außenwand (19") umfasst, die einen hohlen Innenraum definiert, wobei eine Spitze der Schaufel (18") durch eine Spitzenkappe (36") abgeschlossen wird; das Verfahren umfassend:
(a) Entfernen der Spitzenkappe von der Schaufel (18");
(b) Befüllen des Innenraums der Schaufel (18") mit metallischem Pulver (68); und
(c) Verwenden von Laserenergie, die darauf gerichtet ist, eine exponierte Schicht des Pulvers zu sintern, um dadurch eine neue Spitzenkappe (36") zu bilden, die mit der Außenwand (19") metallurgisch verbunden ist und den Innenraum der Schaufel (18") abschließt; und
(d) Entfernen von überschüssigem metallischem Pulver (68) aus dem Innenraum der Schaufel (18")

10. Verfahren gemäß Anspruch 9, wobei die Schaufel (18") eine gerichtet erstarrte oder Einkristall-Mikrostruktur aufweist und die neue Spitzenkappe im Wesentlichen die gleiche Mikrostruktur wie die Schaufel (18") aufweist.

11. Verfahren gemäß Anspruch 9, wobei das Pulver durch mehrfache Durchläufe eines Laserstrahls gesintert wird.

12. Verfahren gemäß Anspruch 10, wobei die Laserenergie in Impulsen angewendet wird.

13. Verfahren gemäß Anspruch 10, das außerdem ein Anbringen einer sich radial nach außen erstreckenden Spitzenwand an die Spitzenkappe umfasst durch:
(a) Ablagern von geschmolzenem metallischem Pulver an der neuen Spitzenkappe, wobei das Pulver unter Verwendung von Laserenergie geschmolzen wird; und
(b) Erlauben, dass das geschmolzene Pulver erstarrt.

14. Verfahren gemäß Anspruch 9, wobei das Pulver eine Legierung umfasst, die korrosionsbeständiger als eine Legierung der Schaufel ist.

15. Verfahren gemäß Anspruch 9, wobei die Schaufel eine gerichtet erstarrte oder Einkristall-Mikrostruktur aufweist und die neue Spitzenkappe im Wesentlichen die gleiche Mikrostruktur wie die Schaufel aufweist.

## Revendications

1. Procédé de fabrication d'une structure à pointe d'aube de turbine, comprenant :
(a) la fourniture d'une aube de turbine (18") avec une paroi extérieure (19") qui définit un intérieur creux, dans lequel une pointe de l'aube (18"') est ouverte vers l'intérieur creux ;
**caractérisé en ce que** le procédé comprend en outre :
(b) le remplissage de l'intérieur de l'aube (18") avec de la poudre métallique (68) ;
(c) l'utilisation de l'énergie laser dirigée pour fritter une couche exposée de la poudre de sorte à former un bouchon de pointe (36"') qui est collé par voie métallurgique à la paroi extérieure (19") et ferme l'intérieur de l'aube (18") ; et
(d) le retrait de l'excès de poudre métallique (68) de l'intérieur de l'aube (18").

2. Procédé selon la revendication 1, dans lequel l'aube (18") présente une microstructure à solidification dirigée ou monocristalline, et la paroi de pointe (36") présente sensiblement la même microstructure que l'aube (18").

3. Procédé selon la revendication 1, dans lequel la poudre est frittée par de multiples passages d'un faisceau laser.

4. Procédé selon la revendication 1, dans lequel l'énergie laser est appliquée par impulsions.

5. Procédé selon la revendication 1, comprenant en outre l'application d'une paroi de pointe s'étendant radialement vers l'extérieur sur le bouchon de pointe en :
(a) déposant de la poudre métallique fondue sur le bouchon de pointe, dans lequel la poudre est fondue en utilisant l'énergie laser ; et
(b) laissant la poudre fondue se solidifier.

6. Procédé selon la revendication 1, dans lequel la poudre comprend un alliage qui est plus résistant à la corrosion qu'un alliage de l'aube.

7. Procédé selon la revendication 5, dans lequel l'aube présente une microstructure à solidification dirigée ou monocristalline, et la paroi de pointe présente sensiblement la même microstructure que l'aube.

8. Procédé selon la revendication 1, dans lequel la paroi extérieure comprend des parois latérales à refoulement et aspiration espacées.

9. Procédé de réparation d'une aube de turbine (18") qui comprend une paroi extérieure (19") définissant un intérieur creux, dans lequel une pointe de l'aube (18") est fermée par un bouchon de pointe (36"), le procédé comprenant :
(a) le retrait du bouchon de pointe de l'aube (18") ;
(b) le remplissage de l'intérieur de l'aube (18") avec de la poudre métallique (68) ;
(c) l'utilisation de l'énergie laser dirigée pour fritter une couche exposée de la poudre de sorte à former un nouveau bouchon de pointe (36") qui est collé par voie métallurgique à la paroi extérieure (19") et ferme l'intérieur de l'aube (18") ; et
(d) le retrait de l'excès de poudre métallique (68) de l'intérieur de l'aube (18").

10. Procédé selon la revendication 9, dans lequel l'aube (18") présente une microstructure à solidification dirigée ou monocristalline, et le nouveau bouchon de pointe présente sensiblement la même microstructure que l'aube (18").

11. Procédé selon la revendication 9, dans lequel la poudre est frittée par de multiples passages d'un faisceau laser.

12. Procédé selon la revendication 10, dans lequel l'énergie laser est appliquée par impulsions.

13. Procédé selon la revendication 10, comprenant en outre l'application d'une paroi de pointe s'étendant radialement vers l'extérieur sur le bouchon de pointe en :
(a) déposant de la poudre métallique fondue sur le nouveau bouchon de pointe, dans lequel la poudre est fondue en utilisant l'énergie laser ; et
(b) laissant la poudre fondue se solidifier.

14. Procédé selon la revendication 9, dans lequel la poudre comprend un alliage qui est plus résistant à la corrosion qu'un alliage de l'aube.

15. Procédé selon la revendication 9, dans lequel l'aube présente une microstructure à solidification dirigée ou monocristalline, et le nouveau bouchon de pointe présente sensiblement la même microstructure que l'aube.
